# EUROPÄISCHE PATENTANMELDUNG

(11) **EP 2 505 291 A2**
(43) Veröffentlichungstag der Anmeldung: **03.10.2012**
(21) Anmeldenummer: 12001428.7
(22) Anmeldetag: 01.03.2012
(51) Int. Cl.: B23F 17/00, B23F 1/02, B23F 23/12

(54) **Verzahnmaschine**

(30) Priorität: 29.03.2011 DE 102011015447
(71) Anmelder: LIEBHERR-VERZAHNTECHNIK GmbH, 87437 Kempten (DE)
(72) Erfinder: Geiser, Hansjörg, 87487 Wiggensbach (DE)
(74) Vertreter: Laufhütte, Dieter

(57) **Zusammenfassung**

Die vorliegende Erfindung betrifft eine Verzahnmaschine, insbesondere Verzahnungsschleifmaschine, mit einer Werkstückaufnahme und einer ersten Werkzeugaufnahme, welche zur Verzahnungsbearbeitung eines in der Werkstückaufnahme eingespannten Werkstückes durch ein in der ersten Werkzeugaufnahme eingespanntes Werkzeug über Bewegungsachsen der Verzahnmaschine relativ zueinander bewegbar sind, wobei die erste Werkzeugaufnahme um eine erste Drehachse der Verzahnmaschine in Rotation versetzbar ist und die Werkstückaufnahme um eine zweite Drehachse der Verzahnmaschine in Rotation versetzbar ist, und wobei die erste Werkzeugaufnahme an einem Bearbeitungskopf angeordnet ist, welcher über mindestens eine erste lineare Bewegungsachse der Verzahnmaschine parallel zur zweiten Drehachse der Werkstückaufnahme bewegbar ist. Erfindungsgemäß weist die Verzahnmaschine weiterhin einen zweiten Bearbeitungskopf mit einer zweiten Werkzeugaufnahme auf, welcher unabhängig von dem ersten Bearbeitungskopf über eine zur ersten linearen Bewegungsachse parallele zweite lineare Bewegungsachse bewegbar ist.

## Beschreibung

Die vorliegende Erfindung betrifft eine Verzahnmaschine mit einer Werkstückaufnahme und einer ersten Werkzeugaufnahme, welche zur Verzahnungsbearbeitung eines in der Werkstückaufnahme eingespannten Werkstückes durch ein in der ersten Werkzeugaufnahme eingespanntes Werkzeug über Bewegungsachsen der Verzahnmaschine relativ zueinander bewegbar sind.

Solche Verzahnmaschinen sind in einer Vielzahl von Ausführungen bereits bekannt. Dabei können sehr unterschiedliche Konfigurationen an Bewegungsachsen der Verzahnmaschine vorgesehen sein, welche die mit der Verzahnmaschine möglichen Bearbeitungsverfahren sowie für die Effizienz des Verfahrens bestimmen.

Weiterhin ist es bereits bekannt, zwei unabhängig voneinander um gewisse Bewegungsachsen bewegbare Bearbeitungsköpfe vorzusehen, um ein Werkstück gleichzeitig mit zwei Werkzeugen bearbeiten zu können.

Aufgabe der vorliegenden Erfindung ist es, eine möglichst flexibel und effizient einsetzbare Verzahnmaschine zur Verfügung zu stellen.

Diese Aufgabe wird erfindungsgemäß durch eine Verzahnmaschine gemäß Anspruch 1 gelöst. Die erfindungsgemäße Verzahnmaschine umfaßt eine Werkstückaufnahme und eine erste Werkzeugaufnahme, welche zur Verzahnungsbearbeitung eines in der Werkstückaufnahme eingespannten Werkstückes durch ein in der ersten Werkzeugaufnahme eingespanntes Werkzeug über Bewegungsachsen der Verzahnmaschine relativ zueinander bewegbar sind. Erfindungsgemäß ist die erste Werkzeugaufnahme um eine erste Drehachse (B1) der Verzahnmaschine in Rotation versetzbar, während die Werkstückaufnahme um eine zweite Drehachse (C1) der Verzahnmaschine in Rotation versetzbar ist, wobei die erste Werkzeugaufnahme an einem Bearbeitungskopf angeordnet ist, welcher über mindestens eine erste lineare Bewegungsachse (Z1) der Verzahnmaschine parallel zur zweiten Drehachse (C1) der Werkstückaufnahme bewegbar ist. Erfindungsgemäß ist nun vorgesehen, daß die Verzahnmaschine weiterhin einen zweiten Bearbeitungskopf mit einer zweiten Werkzeugaufnahme und einer zweiten Drehachse (B2) aufweist, welche unabhängig von dem ersten Bearbeitungskopf über eine zur ersten linearen Bewegungsachse, (Z1) parallele zweite lineare Bewegungsachse (Z2) bewegbar ist. Die beiden unabhängig voneinander in Z-Richtung bewegbaren Bearbeitungsköpfe ermöglichen eine besonders flexible und effiziente Nutzung der erfindungemäßen Verzahnmaschine.

Bei der erfindungsgemäßen Verzahnmaschine kann es sich insbesondere um eine Verzahnungsschleifmaschine handeln. Ebenso kann die vorliegende Erfindung jedoch auch bei Verzahnungsfräsmaschinen eingesetzt werden.

Insbesondere kommt die vorliegende Erfindung dabei bei Verzahnmaschinen zum Einsatz, welche eine Steuerung zum automatischen Ansteuern der Bewegungsachsen der Verzahnmaschine während der Verzahnungsbearbeitung eines Werkstückes und/oder während des Abrichtens eines Werkzeugs aufweist. Insbesondere sind in dieser Steuerung entsprechende Funktionen zum Ansteuern der Bewegungsachsen der Verzahnmaschine implementiert. Insbesondere handelt es sich bei den Bewegungsachsen der Verzahnmaschine dabei um NC-Achsen.

Erfindungsgemäß kann weiterhin vorgesehen sein, daß unabhängig voneinander der erste Bearbeitungskopf über eine dritte Linearbewegungsachse (V1) und der zweite Bearbeitungskopf über eine vierte lineare Bewegungsachse (V2) bewegbar sind.

Ebenfalls kann erfindungsgemäß vorgesehen sein, daß unabhängig voneinander der erste Bearbeitungskopf über eine erste Schwenkachse (A1) und der zweite Bearbeitungskopf über eine zweite Schwenkachse (A2) verschwenkbar sind.

Diese weiteren unabhängig voneinander ansteuerbaren Bewegungsachsen ermöglichen einen noch flexibleren Einsatz der erfindungsgemäßen Verzahnmaschine.

Insbesondere können die dritte und die vierte lineare Bewegungsachse (V1) und (V2) dabei jeweils eine Bewegung des jeweiligen Bearbeitungskopfes in einer zum Werkstück tangentialen Ebene ermöglichen. Weiterhin können die erste und die zweite Schwenkachse (A1) und (A2) jeweils senkrecht auf den ersten und zweiten Bewegungsachsen (Z1) und (Z2) und senkrecht auf den dritten und vierten linearen Bewegungsachsen (V1) und (V2) verlaufen. Insbesondere können die beiden Schwenkachsen (A1) und (A2) dabei parallel zueinander verlaufen. Weiterhin können die dritte und vierte lineare Bewegungsachse (V1) und V2) in der gleichen Ebene verlaufen und weiterhin vorteilhafterweise parallel zueinander sein.

In einer bevorzugten Ausführung der vorliegenden Erfindung ist dabei die dritte lineare Bewegungsachse (V1) zwischen der ersten Schwenkachse (A1) und der ersten linearen Bewegungsachse (Z1) angeordnet, während die vierte lineare Bewegungsachse (V2) zwischen der zweiten Schwenkachse (A2) und der zweiten linearen Bewegungsachse (Z2) angeordnet ist. Insbesondere weisen dabei die erste lineare Bewegungsachse (Z1) und die dritte lineare Bewegungsachse (V1) einen festen Winkel zueinander auf, insbesondere einen Winkel von 90°. In weiterhin vorteilhafter Weise weisen die zweite lineare Bewegungsachse (Z2) und die vierte lineare Bewegungsachse (V2) einen festen Winkel zueinander auf, insbesondere 90°. Diese Achsanordnung wird als Z-V-A Achsanordnung bezeichnet. Alternativ können die Achsen auch in einer Z-A-V Anordnung angeordnet sein.

In weiterhin vorteilhafter Weise kann vorgesehen sein, daß die beiden Bearbeitungsköpfe an einem gemeinsamen Maschinenständer angeordnet sind, welcher über eine fünfte lineare Bewegungsachse (X1) senkrecht zur zweiten Drehachse (C1) bewegbar ist. Vorteilhafterweise sind dabei an dem Maschinenständer Führungen für die Bewegung der beiden Bearbeitungsköpfe entlang ihrer jeweiligen Bewegungsachsen (Z1) und (Z2) vorgesehen. In vorteilhafter Weise sind die jeweiligen Bearbeitungsköpfe dabei auf Schlitten angeordnet, welche entlang dieser Führungen verschiebbar sind. Auf den Schlitten sind vorteilhafterweise die (V1)-bzw. (V2)-Achsen senkrecht zur (Z1)- bzw. (Z2)-Achse angeordnet. Daraufhin folgen vorteilhafterweise die erste Schwenkachse (A1) bzw. die zweite Schwenkachse (A2), an welchen der Bearbeitungskopf angeordnet ist.

Weiterhin kann die erfindungsgemäße Verzahnmaschine eine Abrichteinheit mit einer ersten Abrichtwerkzeugaufnahme aufweisen, so daß ein in der ersten Abrichtwerkzeugaufnahme aufgenommenes Abrichtwerkzeug zum Abrichten eines in der ersten und/oder zweiten Werkzeugaufnahme eingespannten Werkzeugs einsetzbar ist.

Insbesondere handelt es sich dabei bei der erfindungsgemäßen Verzahnmaschine um eine Verzahnungsschleifmaschine, dessen Schleifwerkzeug über die erfindungsgemäße Abrichteinheit abrichtbar ist.

Vorteilhafterweise weist die Abrichteinheit dabei eine erste Abrichtwerkzeugaufnahme auf, welche um eine dritte Drehachse (B3) in Rotation versetzbar ist. Insbesondere können so Abrichtscheiben als Abrichtwerkzeug eingesetzt werden.

Vorteilhafterweise ist dabei vorgesehen, daß ein in der ersten und/oder zweiten Werkzeugaufnahme eingespanntes Werkzeug auf der Verzahnmaschine abrichtbar ist, während gleichzeitig ein in der anderen Werkzeugaufnahme eingespanntes Werkzeug zum Bearbeiten eines in der Werkstückaufnahme eingespannten Werkstücks eingesetzt wird. Insbesondere weist die Steuerung hierfür vorteilhafterweise eine entsprechende Funktionen auf. Durch das jeweils abwechselnde Abrichten und Schleifen erreicht die erfindungsgemäße Verzahnmaschine durch den Einsatz zweier Bearbeitungsköpfe einen erheblich erhöhten Durchsatz.

In einer ersten Ausführung kann die erfindungsgemäße Abrichteinheit zumindest hinsichtlich linearer Bewegung starr an der Verzahnmaschine angeordnet sein. Beispielsweise kann die Abrichteinheit oberhalb der Bearbeitungsköpfe am Maschinenständer angeordnet sein, insbesondere zwischen den jeweiligen Führungen der (Z1)- bzw. (Z2)-Achse der Bearbeitungsköpfe. Die jeweiligen Bearbeitungsköpfe können dann über ihre (Z1)- bzw. (Z2)-Achse zum Abrichten an die Abrichteinheit herangefahren werden.

Insbesondere können dabei zum Abrichten sämtliche linearen Relativbewegungen zwischen der ersten und/oder zweiten Werkzeugaufnahme und Abrichtwerkzeugaufnahme über lineare Bewegungsachsen des Bearbeitungskopfes erzeugbar sein.

In einer alternativen Ausführung kann die Abrichteinheit dagegen über eine sechste lineare Bewegungsachse (Z3), welche parallel zu den ersten und zweiten Bewegungsachsen (Z1) und (Z2) verläuft, bewegbar sein. Hierdurch kann die Abrichteinheit an die Bearbeitungsköpfe herangefahren werden, wenn diese abgerichtet werden sollen.

Insbesondere kann bei der Verzahnmaschine gemäß der vorliegenden Erfindung eine gemeinsame Abrichteinheit für beide Bearbeitungsköpfe eingesetzt werden. Vorteilhafterweise ist diese dabei zwischen den Führungen der Bearbeitungsköpfe in (Z1)- bzw. (Z2)-Richtung angeordnet.

Die Abrichteinheit kann dabei wie oben beschrieben starr oder linear über eine Z3-Achse verfahrbar ausgeführt sein.

Die Abrichteinheit kann dabei neben einer ersten Abrichtwerkzeugaufnahme weiterhin eine zweite Abrichtwerkzeugaufnahme aufweisen, so daß ein in der ersten Abrichtwerkzeugaufnahme aufgenommenes Abrichtwerkzeug zum Abrichten eines in der ersten Werkzeugaufnahme eingespannten Werkzeugs und gleichzeitig ein in der zweiten Abrichtwerkzeugaufnahme aufgenommenes Abrichtwerkzeug zum Abrichten eines in der zweiten Werkzeugaufnahme eingespannten Werkzeuges einsetzbar ist. Vorteilhafterweise ist dabei auch die zweite Abrichtwerkzeugaufnahme um eine vierte Drehachse (B4) in Rotation versetzbar. Insbesondere können dabei die erste und die zweite Abrichtaufnahme linear unbeweglich zueinander an der Abrichteinheit angeordnet sein.

Selbstverständlich sind jedoch auch Verzahnmaschinen denkbar, bei welchen zwei separat verfahrbare Abrichteinheiten vorgesehen sind.

In einer weiteren alternativen Ausführungsform kann einer der Abrichter über eine Z4-Achse in Richtung des zweiten Abrichters verfahren werden. Durch diese besondere Ausführungsform kann ein Schleifwerkzeug gleichzeitig beidflankig abgerichtet werden, indem die Abrichtwerkzeuge entsprechend der Profilform in Z-Richtung zugestellt werden.

Weiterhin kann bei der erfindungsgemäßen Verzahnmaschine vorgesehen sein, daß die an den beiden Abrichtköpfen angeordneten Werkzeuge gleichzeitig abgerichtet und/oder gleichzeitig zur Verzahnungsbearbeitung eingesetzt werden. Insbesondere weist die Steuerung hierfür vorteilhafterweise entsprechende Funktionen auf.

In einer weiteren Ausführungsform der Erfindung können (galvanisch) hartstoffbeschichtete Werkzeuge (z.B. CBN beschichtet) eingesetzt werden, die nicht abgerichtet werden müssen. Bei ausschließlichem Einsatz dieser Werkzeuge könnte auf die Abrichteinheit verzichtet werden.

Die vorliegende Erfindung umfaßt weiterhin die Verwendung einer Verzahnmaschine, wie sie oben beschrieben wurde, zur Verzahnungsbearbeitung eines Werkstückes oder zum Abrichten eines Werkzeugs. Weiterhin umfaßt die vorliegende Erfindung ein Verfahren zum Betrieb einer Verzahnmaschine, wie sie oben beschrieben wurde, ebenfalls zur Verzahnungsbearbeitung eines Werkstückes und/oder zum Abrichten eines Werkzeuges. Vorteilhafterweise erfolgt dabei die Verwendung bzw. der Betrieb der Verzahnmaschine so, wie dies oben bereits bezüglich der Einsatzmöglichkeiten der erfindungsgemäßen Verzahnmaschine beschrieben wurde. Vorteilhafterweise weist die erfindungsgemäße Verzahnmaschine dabei die bereits oben beschriebene Steuerung auf, welche entsprechende Funktionen zum automatischen Durchführen des erfindungsgemäßen Verfahrens aufweist.

Die vorliegende Erfindung umfaßt weiterhin ein Verfahren zum Betrieb einer Verzahnmaschine mit einem ersten und einem zweiten Bearbeitungskopf, welche unabhängig voneinander zur Verzahnungsbearbeitung eines in der Werkstückaufnahme eingespannten Werkstücks bewegbar sind und eine Abrichteinheit, welche zum Abrichten eines am ersten und/oder zweiten Bearbeitungskopf angeordneten Werkzeugs einsetzbar ist. Bei dem erfindungsgemäßen Verfahren ist dabei vorgesehen, daß der erste und der zweite Bearbeitungskopf abwechselnd zur Verzahnungsbearbeitung eines oder mehrerer Werkstücke eingesetzt werden. Hierdurch ergibt sich ein besonders effektives Verzahnverfahren.

Dabei kann vorgesehen sein, daß der erste und der zweite Bearbeitungskopf abwechselnd zur Verzahnungsbearbeitung desselben Werkstücks mit unterschiedlichen Werkzeugen, insbesondere mit Schleifwerkzeugen unterschiedlicher Körnung eingesetzt werden. Zum Beispiel kann dabei der eine Bearbeitungskopf zum Schruppen, der andere Bearbeitungskopf zum Schlichten des gleichen Werkstücks eingesetzt werden.

Ebenfalls kann vorgesehen sein, daß der erste Bearbeitungskopf zum Verzahnen eines Werkstücks eingesetzt wird, während das Werkzeug des zweiten Bearbeitungskopfes abgerichtet wird. Dabei können identische oder unterschiedliche Werkzeuge eingesetzt werden.

Selbstverständlich kann weiterhin eine Betriebsweise der erfindungsgemäßen Verzahnmaschine vorgesehen sein, bei welcher beide Bearbeitungsköpfe zum gleichzeitigen Bearbeiten eines Werkstücks eingesetzt werden. Ebenso kann eine Betriebsweise vorgesehen sein, bei welcher beide Werkzeuge gleichzeitig abgerichtet werden.

Bedingt durch die Anordnung der beiden Schleifköpfe auf einem gemeinsamen Ständer gilt es eine Besonderheit bei balligen Schrägverzahnungen zu beachten. Wenn beide Schleifscheiben gleichzeitig zum Einsatz kommen, muß der Höhenversatz der Eingriffstrecken, bedingt durch den Schrägungswinkel der Verzahnung, durch unterschiedliche Z-Positionen kompensiert werden. Wenn dies nicht berücksichtigt wird, werden die Balligkeitshochpunkte der Verzahnung um den Höhenversatz der Eingriffsstrecke versetzt an unterschiedlichen Breitenpositionen der Links-und Rechtsflanke erzeugt.

Geschliffen werden kann mit einer unterschiedlichen Schleifstrategie. Wenn immer nur eine Scheibe schleift und die andere gerade abgerichtet wird, kann diese Scheibe in genau der Mitte der Verzahnungsachse (ein- bzw. beidflankig) bearbeiten. Das Profil für diesen Schleifprozeß - mit mittig angeordneter Schleifscheibe - unterscheidet sich deutlich von dem Profil, bei dem der Schleifscheibeneingriff außermittig stattfindet.

Insbesondere handelt es sich bei dem erfindungsgemäßen Verfahren um ein Verfahren zum Betrieb einer Verzahnmaschine, wie sie oben bereits beschrieben wurde. Weiterhin ist das erfindungsgemäße Verfahren dabei vorteilhafterweise so ausgestaltet, wie dies bereits oben hinsichtlich der Einsatzmöglichkeiten der erfindungsgemäßen Verzahnmaschine beschrieben wurde.

Weiterhin umfaßt die vorliegende Erfindung eine Verzahnmaschine mit einer Steuerung zur automatischen Durchführung eines Verfahrens, wie es oben näher beschrieben wurde. Insbesondere weist die Verzahnmaschine dabei entsprechende Funktionen auf, durch welche die entsprechenden Bearbeitungsmöglichkeiten implementiert sind.

Die vorliegende Erfindung kann für unterschiedliche Verzahnverfahren wie das Verzahnungsschleifen oder das Verzahnungsfräsen eingesetzt werden. Insbesondere können dabei als Werkzeuge Schleifwerkzeuge oder Fräswerkzeuge eingesetzt werden.

Besonders bevorzugt ist die vorliegende Erfindung jedoch bei Verzahnungsschleifmaschinen einsetzbar, da hier die besonderen Vorteile beim Abrichtbetrieb gemäß der vorliegenden Erfindung zum Tragen kommen können. Als Schleifwerkzeuge sind dabei sowohl Schleifscheiben als auch Schleifschnecken einsetzbar. So können beide Bearbeitungsköpfe jeweils mit einer Schleifscheibe ausgestattet sein oder jeweils mit einer Schleifschnecke. Ebenfalls ist denkbar, einen der Schleifköpfe mit einer Schleifscheibe, den anderen dagegen mit einer Schleifschnecke auszustatten.

Die vorliegende Erfindung wird nun anhand von Ausführungsbeispielen sowie Zeichnungen näher dargestellt. Dabei zeigen:
- Figur 1:: ein erstes Ausführungsbeispiel einer Verzahnmaschine gemäß der vorliegenden Erfindung in einer Schleifposition,
- Figur 2:: das in Figur 1 gezeigte Ausführungsbeispiel der vorliegenden Erfindung in einer Abrichtposition,
- Figur 3:: einen vergrößerten Ausschnitt der in Figur 2 gezeigten Abrichtposition,
- Figur 4:: einen vergrößerten Abschnitt der in Figur 1 gezeigten Schleifposition,
- Figur 5:: ein zweites Ausführungsbeispiel einer erfindungsgemäßen Verzahnmaschine mit ortsfester Abrichteinheit,

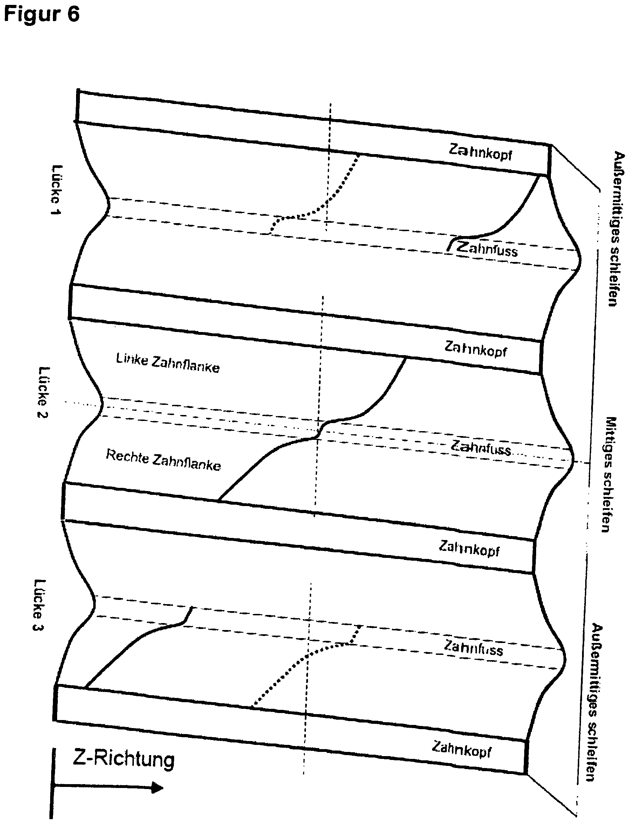

- Figur 6:: zeigt den Höhenversatz der Eingriffslinie bei Schrägverzahnungen und
- Figur 7:: zeigt verschiedene Eingriffspositionen des Schleifwerkzeuges am Zahnrad und die Auswirkung daraus auf das Schleifscheibenprofil.

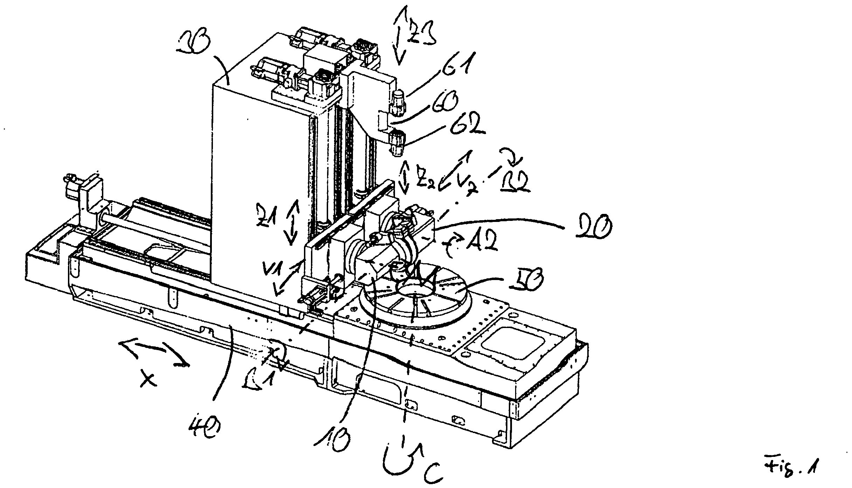

Die Figuren 1 bis 4 zeigen ein erstes Ausführungsbeispiel einer erfindungsgemäßen Verzahnmaschine. Dabei handelt es sich im Ausführungsbeispiel um eine Verzahnungsschleifmaschine. Eine entsprechende Kinematik könnte jedoch auch bei Verzahnungsfräsmaschinen eingesetzt werden.

Die erfindungsgemäße Verzahnmaschine weist einen ersten Bearbeitungskopf 10 auf, an welchem ein Werkzeug über eine entsprechende Werkzeugaufnahme um eine Drehachse B1 in Rotation versetzbar ist. Weiterhin ist ein zweiter Bearbeitungskopf 20 vorgesehen, an welchem ein zweites Werkzeug über eine am zweiten Bearbeitungskopf angeordnete zweite Werkzeugaufnahme anordenbar und um eine Drehachse B2 rotierbar ist. Hierfür sind entsprechende Antriebe an dem ersten und dem zweiten Bearbeitungskopf 10 bzw. 20 angeordnet.

Die erfindungsgemäße Verzahnmaschine weist weiterhin eine Werkstückaufnahme 50 auf, in welche ein Werkstück eingespannt werden kann. Die Werkstückaufnahme ist dabei um eine Drehachse C1 antreibbar. Die Drehachse C1 ist dabei im Ausführungsbeispiel senkrecht angeordnet.

Die beiden Bearbeitungsköpfe 10 und 20 sind nun erfindungsgemäß jeweils separat parallel zur Drehachse C1 des Werkstücks verfahrbar. Zum Verfahren des ersten Bearbeitungskopfes 10 ist dabei eine erste lineare Bewegungsachse Z1, zum Verfahren des zweiten Bearbeitungskopfes 20 eine zweite lineare Bewegungsachse Z2 vorgesehen.

Weiterhin weist der erste Bearbeitungskopf 10 eine dritte lineare Bewegungsachse V1 und eine Schwenkachse A1 auf, durch welche der erste Bearbeitungskopf unabhängig vom zweiten Bearbeitungskopf linear in eine Richtung senkrecht zur Z1-Achse verfahren und um die auf der Z1 und der V1-Achse senkrecht stehende A1-Achse verschwenkt werden kann. Der zweite Bearbeitungskopf weist dementsprechend eine vierte Bewegungsachse V2 und eine zweite Schwenkachse A2 auf.

Im Ausführungsbeispiel sind dabei die erste und die dritte lineare Bewegungsachse Z1 und V1 unverdrehbar und senkrecht zueinander angeordnet, ebenso wie die zweite Linearbewegungsachse Z2 und die vierte Linearbewegungsachse V2. Im Ausführungsbeispiel verlaufen die Z-Achsen damit jeweils senkrecht, die V-Achsen dagegen waagrecht. Die V-Achsen sind dabei jeweils zwischen den A-Achsen und den Z-Achsen angeordnet.

Alternativ wäre jedoch auch eine Anordnung der A-Achsen jeweils zwischen Z- und V-Achse möglich. Insbesondere können dabei die V-Achsen jeweils parallel zu den Rotationsachsen B1 bzw. B2 für die Werkzeugaufnahmen angeordnet sein und so ein klassisches Vershiften der Werkzeuge ermöglichen. Bei dieser Achsanordnung wird die V-Achse mit der A-Achse geschwenkt. Damit verläuft die V-Achse nicht mehr waagrecht und steht auch nicht mehr senkrecht auf Z.

Erfindungsgemäß ist weiterhin ein gemeinsamer Maschinenständer 30 vorgesehen, an dem beide Bearbeitungsköpfe angeordnet sind. Dieser weist Führungen auf, an welchen entlang jeweils Schlitten in Z-Richtung bewegbar sind, auf welchen dann jeweils die Bearbeitungsköpfe angeordnet sind. Der Maschinenständer 30 ist gegenüber einem Maschinentisch 50, auf welchem die Werkstückaufnahme angeordnet ist, über eine lineare Bewegungsachse X in radialer Richtung bewegbar. Die Zustellbewegung an das Werkstück heran bzw. vom Werkstück weg ist damit für beide Bearbeitungsköpfe identisch. Ansonsten können die beiden Bearbeitungsköpfe dagegen jeweils unabhängig voneinander angesteuert werden.

Bei einer alternativen Ausführungsform kann der Tisch radial in X-Richtung hin zu einem fest stehenden Maschinenständer (30) verfahren werden.

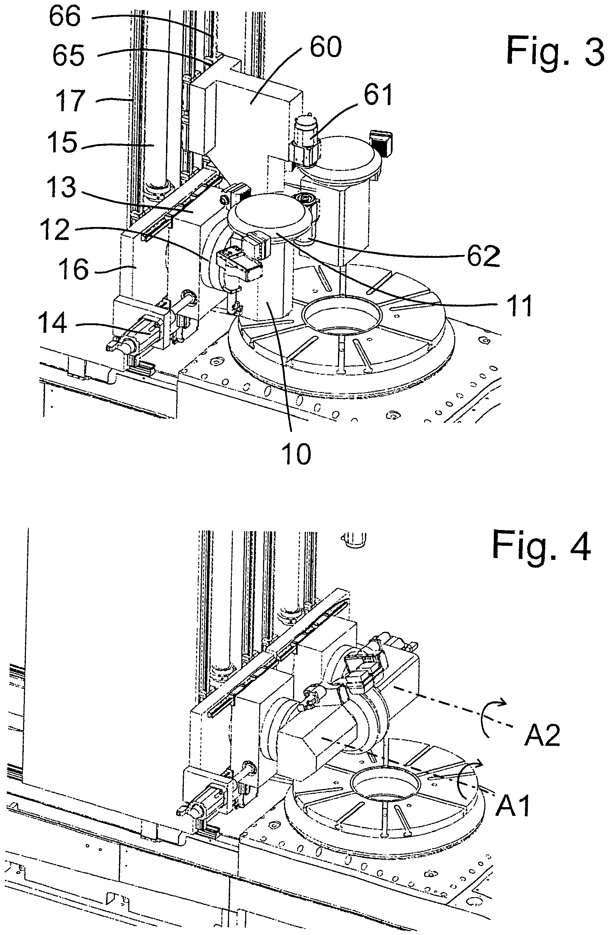

In Figur 3 ist die Anordnung der Bearbeitungsköpfe 10 bzw. 20 am Maschinenständer 30 nochmals näher erkennbar. Der Bearbeitungskopf 10 ist dabei über ein Drehgelenk 12 an einem Schlitten 13 angeordnet, wobei das Drehgelenk 12 das Verschwenken um die A1-Achse ermöglicht. Das Drehgelenk 12 könnte auch ein Direktantriebsmotor sein. Der Schlitten 13 ist auf einer Führung an einem weiteren Schlitten 16 angeordnet und stellt die V1-Achse zur Verfügung. Zum Antrieb des Schlittens 13 entlang der Führung ist ein Antriebsmotor 14 vorgesehen. Der Schlitten 16 ist seinerseits auf Führungen 17 am Maschinenträger in Z1-Richtung gelagert und über einen dort angeordneten Antrieb antreibbar, wobei eine Kugelrollspindel 15 oder ein Linearmotor zur Bewegung des Schlittens 16 vorgesehen ist. Der zweite Bearbeitungskopf 20 ist identischer Weise am Maschinenständer 30 angeordnet.

In Figur 1 ist die erfindungsgemäße Verzahnmaschine dabei in einem ersten Bearbeitungsmodus gezeigt, in welchem beide Bearbeitungsköpfe zum Bearbeiten eines Werkstücks, welches der Übersicht halber nicht dargestellt wurde, eingesetzt werden. Die entsprechende Situation ist nochmals vergrößert in Figur 4 dargestellt. Dabei ist zu sehen, daß die beiden Bearbeitungsköpfe über die Schwenkachsen A1 bzw. A2 jeweils so verschwenkt sind, daß die Rotationsachsen B1 bzw. B2 für die Werkzeuge parallel zueinander ausgerichtet sind.

In einem weiteren Betriebsmodus der erfindungsgemäßen Verzahnmaschine kann dagegen einer der Bearbeitungsköpfe zum Bearbeiten eines Werkstückes eingesetzt werden, während gleichzeitig der andere Bearbeitungskopf abgerichtet wird. Hierfür wird der jeweilige Bearbeitungskopf zum Abrichten in über die A1- bzw. A2-Achse in eine Abrichtposition verschwenkt, während der jeweils andere Bearbeitungskopf in eine Schleifposition verschwenkt wird.

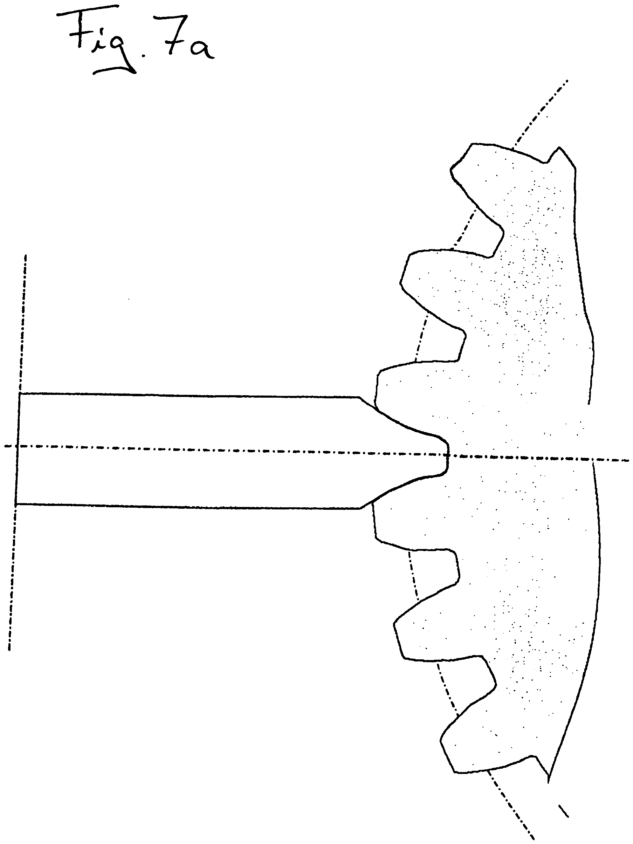

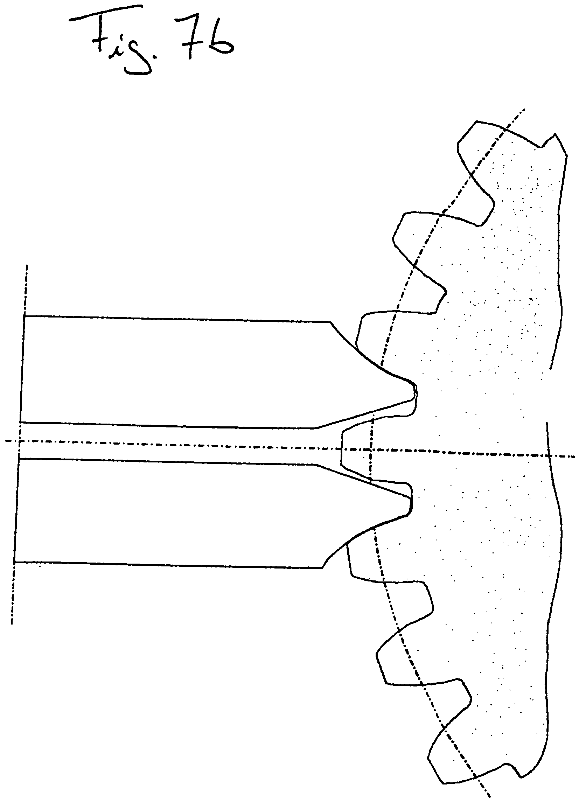

Wie in der Figur 7 gezeigt sind abhängig vom Betriebsmoduns unterschiedliche Abrichtprofile auf den Schleifwerkzeugen zu erstellen, je nachdem, ob das Werkzeug die Zahnlücke mittig oder außermittig zum Werkstück bearbeitet.

Zum Abrichten ist erfindungsgemäß eine Abrichteinheit 60 vorgesehen, welche oberhalb der Bearbeitungsköpfe am Maschinenständer 30 angeordnet ist. Die Abrichteinheit 60 ist dabei zwischen den beiden Bearbeitungsköpfen angeordnet, so daß beide Bearbeitungsköpfe über die Abrichteinheit abrichtbar sind.

Die erfindungsgemäße Abrichtungseinheit 60 weist die Besonderheit auf, daß sie zwei Abrichtwerkzeugaufnahmen 61 bzw. 62 aufweist, welche jeweils separat voneinander Abrichtwerkzeuge 63 bzw. 64 aufnehmen und in Rotation versetzen können. Die beiden Abrichtwerkzeugaufnahmen sind dabei in Z-Richtung übereinander angeordnet. Hierdurch ist es möglich, gleichzeitig beide Werkzeuge abzurichten. Dabei ist die Zustellachse Z4 zu berücksichtigen.

Auch eine Ausführungsform mit nur einem Abrichter ist im Rahmen der Erfindung möglich. In einer weiteren alternativen Ausführungsform sind die Achsen der Abrichtwerkzeuge B3 und B4 parallel zu den V1/V2 Achsen ausgerichtet.

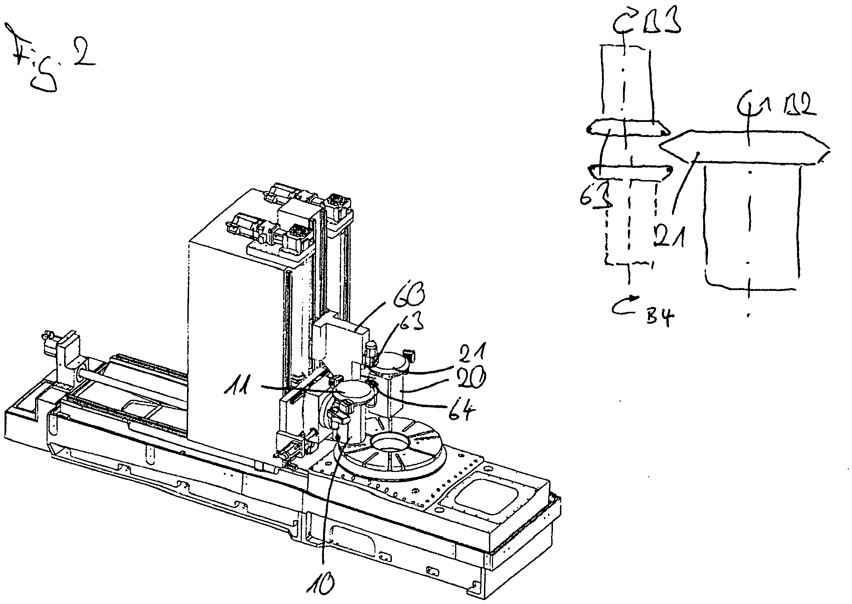

Hierzu werden, wie in Figuren 2 und 3 gezeigt, beide Bearbeitungsköpfe in Abrichtposition gedreht, so daß die Rotationsachsen B1 bzw. B2 jeweils vertikal ausgerichtet sind. Im Ausführungsbeispiel ist dabei die Rotationsachse B1 bzw. B2 der jeweiligen Werkzeuge 11 bzw. 21 parallel zur Z1-Achse bzw. zur Z2-Achse angeordnet. Weiterhin ist im Ausführungsbeispiel die jeweilige Rotationsachse des Abrichtwerkzeugs parallel zur Rotationsachse des abzurichtenden Werkzeugs angeordnet. Dies ist insbesondere in der vergrößerten Darstellung in Figur 2 anhand des zweiten Bearbeitungskopfes mit dem Werkzeug 21 und dem diesen zugeordneten Abrichtwerkzeug 63 dargestellt. Dabei sind die jeweiligen Rotationsachsen B2 bzw. B3 parallel angeordnet. Die jeweiligen Relativbewegungen zwischen Abrichtwerkzeug und Werkzeug zum Herstellen des gewünschten Profils werden dabei vorteilhafterweise über die Bewegungsachsen des Bearbeitungskopfes vorgenommen, insbesondere über dessen Z- und V-Achsen. Hierdurch ist es beispielsweise auch möglich, auf den beiden Werkzeugen jeweils unterschiedliche Profile zu erzeugen.

Bei dem in Fig. 1 bis 4 gezeigten Ausführungsbeispiel ist die Abrichteinheit 60 über eine zur Z1- und Z2-Achse parallele Z3-Achse linear verfahrbar. Hierfür werden im Ausführungsbeispiel jeweils die mittleren Schienen, über welche die Schlitten der beiden Bearbeitungsköpfe in Z1-bzw. Z2-Richtung geführt sind, gleichzeitig als Führungsschienen für die Abrichteinheit 60 eingesetzt. Selbstverständlich ist aber auch eine separate Führung für die Abrichteinheit 60 denkbar. Zum Abrichten kann so die Abrichteinheit 60 zu den Bearbeitungsköpfen heruntergefahren werden.

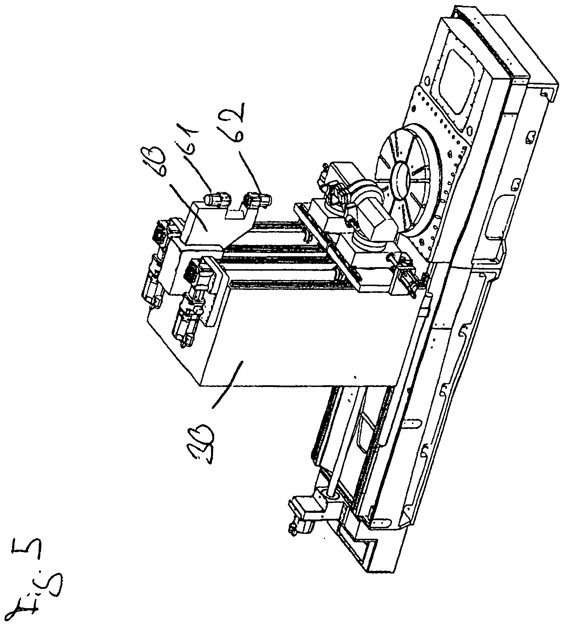

In der alternativen in Figur 5 gezeigten Ausführungsform ist die Abrichteinheit 60 dagegen starr am Maschinenträger 30 angeordnet. Hier müssen daher die jeweiligen Bearbeitungsköpfe über die Z1- bzw. Z2-Achse zur Abrichteinheit herangefahren werden. Ansonsten entspricht das Ausführungsbeispiel in Fig. 5 dem in Fig. 1 bis 4 dargestellten Ausführungsbeispiel.

Die erfindungsgemäße Verzahnmaschine kann durch die beiden separat bewegbaren Bearbeitungsköpfe in mehreren Betriebsmodi äußerst flexibel eingesetzt werden. Die Verzahnmaschine weist dabei insbesondere eine Steuerung zur automatischen Ansteuerung der Bewegungsachsen der Verzahnmaschine auf. Zur Durchführung der unterschiedlichen Schleif- bzw. Abrichtoptionen sind dabei jeweils entsprechende Funktionen in die Steuerung integriert.

## Patentansprüche

1. Verzahnmaschine, insbesondere Verzahnungsschleifmaschine, mit einer Werkstückaufnahme und einer ersten Werkzeugaufnahme, welche zur Verzahnungsbearbeitung eines in der Werkstückaufnahme eingespannten Werkstückes durch ein in der ersten Werkzeugaufnahme eingespanntes Werkzeug über Bewegungsachsen der Verzahnmaschine relativ zueinander bewegbar sind, wobei die erste Werkzeugaufnahme um eine erste Drehachse (B1) der Verzahnmaschine in Rotation versetzbar ist und die Werkstückaufnahme um eine zweite Drehachse (C1) der Verzahnmaschine in Rotation versetzbar ist, und wobei die erste Werkzeugaufnahme an einem Bearbeitungskopf angeordnet ist, welcher über mindestens eine erste lineare Bewegungsachse (Z1) der Verzahnmaschine parallel zur zweiten Drehachse (C1) der Werkstückaufnahme bewegbar ist, und wobei die Verzahnmaschine vorteilhafterweise eine Steuerung zum automatischen Ansteuern der Bewegungsachsen der Verzahnmaschine während der Verzahnungsbearbeitung eines Werkstückes und/oder während des Abrichtens eines Werkzeuges aufweist,
**dadurch gekennzeichnet,**
**daß** die Verzahnmaschine weiterhin einen zweiten Bearbeitungskopf mit einer zweiten Werkzeugaufnahme und eine zweite Drehachse (B2) aufweist, welcher unabhängig von dem ersten Bearbeitungskopf über eine zur ersten linearen Bewegungsachse (Z1) parallele zweite lineare Bewegungsachse (Z2) bewegbar ist.

2. Verzahnmaschine nach Anspruch 1, wobei unabhängig voneinander der erste Bearbeitungskopf über eine dritte lineare Bewegungsachse (V1) und der zweite Bearbeitungskopf über eine vierte lineare Bewegungsachse (V2) bewegbar ist und/oder wobei unabhängig voneinander der erste Bearbeitungskopf über eine erste Schwenkachse (A1) und der zweite Bearbeitungskopf über eine zweite Schwenkachse (A2) schwenkbar sind, wobei vorteilhafterweise die dritte lineare Bewegungsachse (V1) zwischen der ersten Schwenkachse (A1) und der ersten linearen Bewegungsachse (Z1) und die vierte lineare Bewegungsachse (V2) zwischen der zweiten Schwenkachse (A2) und der zweiten linearen Bewegungsachse (Z2) angeordnet ist und/oder wobei die beiden Bearbeitungsköpfe an einem gemeinsamen Maschinenständer angeordnet sind, welcher über eine fünfte lineare Bewegungsachse (X1) senkrecht zur zweiten Drehachse (C1) bewegbar ist.

3. Verzahnmaschine nach einem der vorangegangenen Ansprüche, wobei die Verzahnmaschine weiterhin eine Abrichteinheit mit einer ersten Abrichtwerkzeugaufnahme aufweist, so daß ein in der ersten Abrichtwerkzeugaufnahme aufgenommenes Abrichtwerkzeug zum Abrichten eines in der ersten und/oder zweiten Werkzeugaufnahme eingespannten Werkzeuges einsetzbar ist, wobei die erste Abrichtwerkzeugaufnahme vorteilhafterweise um eine dritte Drehachse (B3) in Rotation versetzbar ist, und wobei vorteilhafterweise ein in der ersten und/oder zweiten Werkzeugaufnahme eingespanntes Werkzeug auf der Verzahnmaschine abrichtbar ist, während gleichzeitig ein in der anderen Werkzeugaufnahme eingespanntes Werkzeug zum Bearbeiten eines in der Werkstückaufnahme eingespannten Werkstückes eingesetzt wird.

4. Verzahnmaschine nach einem der vorangegangenen Ansprüche, wobei die Abrichteinheit zumindest hinsichtlich linearer Bewegungen starr an der Verzahnmaschine angeordnet ist und/oder zum Abrichten sämtliche linearen Relativbewegungen zwischen der ersten und/oder zweiten Werkzeugaufnahme und der Abrichtwerkzeugaufnahme über lineare Bewegungsachsen des Bearbeitungskopfes erzeugbar sind.

5. Verzahnmaschine nach einem der vorangegangenen Ansprüche, wobei die Abrichteinheit über eine sechste lineare Bewegungsachse (Z3), welche parallel zu den ersten und zweiten Bewegungsachsen (Z1) und (Z2) verläuft, bewegbar ist.

6. Verzahnmaschine nach einem der vorangegangenen Ansprüche, wobei die Abrichteinheit weiterhin eine zweite Abrichtwerkzeugaufnahme aufweist, so daß ein in der ersten Abrichtwerkzeugaufnahme aufgenommenes Abrichtwerkzeug zum Abrichten eines in der ersten Werkzeugaufnahme eingespannten Werkzeuges und gleichzeitig ein in der zweiten Abrichtwerkzeugaufnahme aufgenommenes Abrichtwerkzeug zum Abrichten eines in der zweiten Werkzeugaufnahme eingespannten Werkzeuges einsetzbar ist, wobei die zweite Abrichtwerkzeugaufnahme vorteilhafterweise um eine vierte Drehachse (B4) in Rotation versetzbar ist und/oder wobei die erste und die zweite Abrichtwerkzeugaufnahme linear unbeweglich an der Abrichteinheit angeordnet sind und/oder wobei eine Abrichteinheit linear zur zweiten Abrichteinheit hin verfahrbar ist.

7. Verwendung einer Verzahnmaschine nach einem der vorangegangenen Ansprüche oder Verfahren zum Betrieb einer Verzahnmaschine nach einem der vorangegangenen Ansprüche zur Verzahnungsbearbeitung eines Werkstückes und/oder zum Abrichten eines Werkzeugs.

8. Verfahren zum Betrieb einer Verzahnmaschine, insbesondere nach einem der vorangegangenen Ansprüche mit einem ersten und einem zweiten Bearbeitungskopf, welche unabhängig voneinander zur Verzahnungsbearbeitung eines in der Werkstückaufnahme eingespannten Werkstückes bewegbar sind,
**dadurch gekennzeichnet,**
**dass** beide Bearbeitungsköpfe in Abhängigkeit von einem insbesondere für ballige und stark schräg verzahnte Verzahnungen berechneten Höhenversatz der Eingriffslinie an unterschiedlichen Z-Positionen gleichzeitig eingesetzt werden, um so den Höhenversatz der Eingriffslinie zwischen linker und rechter Flanke zu korrigieren.

9. Verfahren zum Betrieb einer Verzahnmaschine, insbesondere nach einem der vorangegangenen Ansprüche mit einem ersten und einem zweiten Bearbeitungskopf, welche unabhängig voneinander zur Verzahnungsbearbeitung eines in der Werkstückaufnahme eingespannten Werkstückes bewegbar sind, und einer Abrichteinheit, welche zum Abrichten eines am ersten und/oder zweiten Bearbeitungskopfes angeordneten Werkzeuges einsetzbar ist, **dadurch gekennzeichnet,**
**daß** der erste und der zweite Bearbeitungskopf abwechselnd zur Verzahnungsbearbeitung eines oder mehrerer Werkstücke eingesetzt werden.

10. Verfahren nach Anspruch 9, wobei Abrichten und Schleifen gleichzeitig erfolgt, wobei ein einflankiges Schleifen oder ein beidflankiges Schleifen erfolgt.

11. Verfahren nach Anspruch 9 oder 10, wobei der erste und der zweite Bearbeitungskopf abwechselnd zum Verzahnen des selben Werkstücks mit unterschiedlichen Werkzeugen, insbesondere mit Schleifwerkzeugen unterschiedlicher Körnung, eingesetzt werden und/oder wobei der erste Bearbeitungskopf zur Verzahnungsbearbeitung eines Werkstücks eingesetzt wird, während das Werkzeug des zweiten Bearbeitungskopfes abgerichtet wird.

12. Verzahnmaschine mit einer Steuerung zur automatischen Durchführung eines Verfahrens nach einem der Ansprüche 8 bis 11.
